Europäisches Patentamt

European Patent Office

Office européen des brevets

(11) Veröffentlichungsnummer: **0 496 224 A2**

## (12) EUROPÄISCHE PATENTANMELDUNG

(21) Anmeldenummer: **92100374.5**

(22) Anmeldetag: **11.01.92**

(51) Int. Cl.[5]: **G02B 26/02**

(30) Priorität: **23.01.91 DE 4101791**

(43) Veröffentlichungstag der Anmeldung:
**29.07.92 Patentblatt 92/31**

(84) Benannte Vertragsstaaten:
**DK ES FR GB GR IT NL SE**

(71) Anmelder: **ANT Nachrichtentechnik GmbH**
**Gerberstrasse 33**
**W-7150 Backnang(DE)**

(72) Erfinder: **Kuke, Albrecht, Dr. rer. nat.**
**Nelkenweg 2**
**W-7159 Auenwald(DE)**

(54) **Optischer Umschalter.**

(57) Ein optischer Umschalter mit zwei Prismen die zueinander bewegbar sind, weisen den Nachteil auf, daß die optischen oder optoelektronischen Komponenten sehr genau aufeinander einjustiert sein müssen. Außerden muß die Lage der Prismen vor und nach dem Umschalten und auch nach mehrmaligem Umschalten genau reproduzierbar sein.

Beim erfindungsgemäßen optischen Umschalter mit zwei Prismen (B1, B2) werden nicht nur die Prismen relativ zueinander bewegt, sondern sämtliche auf einer Prismenseite angeordneten optischen und optoelektronischen Komponenten, werden mit dem jeweiligen Prisma bewegt.

Schalten von Überbrückungsleitungen

Fig. 1

Die Erfindung betrifft einen optischen Umschalter mit zwei Prismen, die derart relativ zueinander bewegbar sind, daß die Hypotenusenflächen der Prismen an- oder auseinanderliegen und Licht im ersten Fall durch die Prismen ohne Ablenkung hindurchtritt und somit ein oder mehrere erste Wege geschaltet sind und im zweiten Fall Licht zumindest teilweise reflektiert wird und somit ein oder mehrere zweite Wege geschaltet sind.

Aus der GB 1 594 336 ist eine optische Vorrichtung zum Schalten zwischen einer Vielzahl von optischen Lichtwellenleitern bekannt. Dabei sind zwei optische Komponenten vorgesehen, die relativ zueinander bewegt werden können (beispielsweise Prismen), derart, daß Licht auf geradem Wege durch die optischen Komponenten verläuft, wenn diese in Kontakt gebracht sind und Licht teilweise reflektiert wird, wenn die optischen Komponenten nicht in Kontakt gebracht sind. Die optischen Komponenten können beispielsweise mit einem piezoelektrischen Element bewegt werden. An jedem Lichtwellenleiterende ist ein Linsenelement vorgesehen, das den Lichtstrahl aus dem Lichtwellenleiter in einen nahezu parallelen Lichtstrahl umformt. Sämtliche Lichtwellenleiter und Linsenelemente, sowie eine der optischen Komponenten (Prisma) sind fixiert und nur eine der optischen Komponenten (Prisma) wird bewegt. Nachteilig an der beschriebenen Anordnung ist, daß bei der Winkelausrichtung der Berührungsfläche (Hypotenusenfläche des Prismas) der optischen Komponente, insbesondere der bewegten optischen Komponente, höchste Präzisionsanforderungen gestellt werden. Die Winkellage der optischen Komponente bezüglich der Linsenelemente muß also auch nach dem Schalten sehr genau wiederhergestellt werden. Um dies zu gewährleisten, ist bei der vorgeschlagenen Anordnung erhöhter mechanischer Aufwand notwendig.

Es ist Aufgabe der Erfindung einen optischen Umschalter anzugeben, bei dem die hohe erforderliche Präzision und Reproduzierbarkeit auf einfache und sichere Weise erreicht wird.

Die Aufgabe wird durch einen optischen Umschalter gelöst, bei dem zwei Strukturen vorgesehen sind, die um einen gemeinsamen Drehpunkt gelagert sind und auf denen jeweils eines der Prismen und die optischen oder optoelektronischen Komponenten der zweiten Wege, die bei Reflektion am jeweiligen Prisma geschaltet sind, fixiert sind. Vorteilhafte Weiterbildungen sind in den Unteransprüchen angegeben.

Es ist beispielsweise von Vorteil, wenn sich die Hypotenusenflächen der Prismen bereits berühren, wenn die beiden Strukturen, auf denen die Prismen montiert sind, sich noch nicht berühren. Dadurch wird erreicht, daß die Justierung nur bezüglich der Berührungsflächen der Prismen erfolgen muß und nicht bezüglich der Kontaktflächen der beiden Strukturen auf denen die Prismen montiert sind. Somit sind auch die Genauigkeitsanforderungen an die Form der Strukturen bezüglich der Kontaktflächen gering.

Ein erfindungsgemäßer optischer Umschalter kann beispielsweise eine optische Überbrückungsleitung in einem Teilnehmeranschluß im Ortsnetz schalten. Im Überbrückungsfall (Störfall) liegen die Prismen mit ihrem Hypotenusenflächen aufeinander auf. Im Durchschaltefall sind die Prismen voneinander getrennt und das Licht wird an den Hypotenusenflächen total reflektiert. Eine Überbrückungsschaltung zur Überbrückung eines ausgefallenen Teilnehmers sollte vorteilhafterweise ein weiteres Merkmal aufweisen: Auch im Störfall sollte die Empfangsdiode an die Eingangsfaser angekoppelt bleiben. Dieses vorteilhafte Merkmal kann erreicht werden, indem gemäß Anspruch 3 die Hypotenusenfläche eines Prismas teilverspiegelt ist und somit im Störfall ein Teil des ankommenden Lichtes in die Empfangsdiode gesandt wird. Im Durchschaltefall bedeutet dies keine Beeinträchtigung, da das Reflektionsvermögen bei Totalreflektion gleich eins bleibt. Gemäß Anspruch 4 kann man die Verbindung zwischen Empfangsdiode und Eingangsfaser im Störfall auch dadurch erreichen, daß die Prismen unterschiedliche Brechungsindizes aufweisen. Weitere vorteilhafte Ausgestaltungen sind in den Unteransprüchen 5 und 6 angegeben.

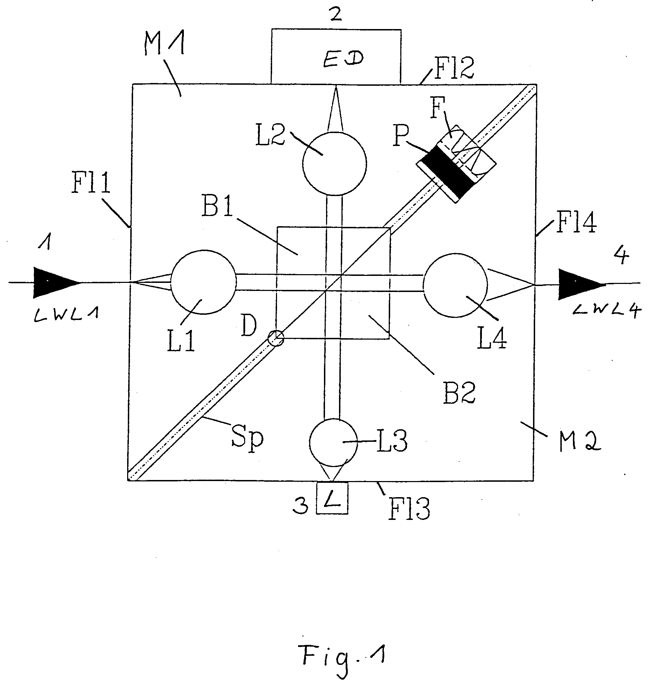

Ein Ausführungsbeispiel der Erfindung wird anhand der Figur 1 erläutert.

Ein quaderförmiger Block ist entlang einer diagonalen Fläche in die Teilblöcke M1 und M2 aufgetrennt. Der Block kann beispielsweise aus Metall oder auch aus Silizium bestehen. In oder auf den Teilblöcken M1, M2 befindet sich ein quaderförmiger Glasblock, der ebenfalls entlang seiner Diagonalen in zwei Prismen B1 und B2 aufgeteilt ist. Die Prismen B1 und B2 sind dabei jeweils in die Teilblöcke M1 und M2 fest eingekittet. Die Teilblöcke M1 und M2 sind seitlich von ebenen Flanschflächen FL1 bis FL4 begrenzt, auf denen an den Ein- bzw. Ausgängen 1 bis 4 zwei Lichtwellenleiter LWL1 und LWL4 am Eingang 1 bzw. am Ausgang 4, ein Laser L am Eingang 3 und eine Empfangsdiode ED am Ausgang 2 lateral und axial justiert und dann fixiert werden können. Auf den Teilblöcken M1 und M2 sind vor jedem der Ein- bzw. Ausgänge 1 bis 4 Linsen L1 bis L4 befestigt. Zwischen den Teilblöcken M1 und M2 befindet sich ein Spalt SP, so daß die Teilblöcke M1 und M2 einen geringen Abstand von einander haben. Die Prismen B1 und B2 liegen dagegen im Überbrückungsfall mit ihren Hypotenusenflächen aufeinander auf. Bei guter Ebenheit dieser Flächen kann das Licht vom Lichtwellenleiter LWL1 am Eingang 1 zum Lichtwellenleiter LWL4 am Ausgang 4 die aufeinanderliegenden Hypotenusenflächen ungedämpft geradlinig durchdringen. Die Aus- bzw. Eingänge 2 und 3 sind dabei überbrückt.

Im Durchschaltefall werden die Teilblöcke M1 und M2 um eine Drehachse D, die im Ausführungsbeispiel an einer Ecke der Prismen B1, B2 liegt, voneinander weggedreht. Zur Drehung kann beispielsweise ein Piezoelement P verwendet werden, da nur eine Trennung der Prismen um wenige μm erforderlich ist. In diesem Fall wird das vom Eingang 1 durch den Lichtwellenleiter LWL1 ankommende Licht an der Hypotenusenfläche des Prismas B1 total reflektiert und auf die Empfangsdiode ED am Ausgang 2 umgelenkt. Genauso erfolgt eine Umlenkung vom Eingang 3 an dem der Laser L befestigt ist, zum Ausgang 4 und somit zum Lichtwellenleiter 4.

Die Zurückschaltung des optischen Schalters erfolgt bei Wegnahme der Spannung am Piezoelement P durch eine Feder F.

Der Vorteil der erfindungsgemäßen Anordnung besteht darin, daß die Positionen der optischen Ein- und Ausgangskomponenten sowie der Linsen L1 bis L4 relativ zu den reflektierenden Hypotenusenflächen der Prismen B1 und B2 fixiert bleiben und sich auch während des Schaltungsvorgangs nicht verändern. Die Fixierung der Prismen an der Drehachse D verhindert zudem, daß die Prismen B1, B2 und somit auch die gesamten Teilblöcke M1 und M2 mit allen Komponenten beim Schalten gegeneinander verschieben. Wenn auch im Störfall die Empfangsdiode ED an die Eingangsfaser LWL1 angekoppelt bleiben soll, so kann man diese Forderung erfüllen, indem

1. die Hypotenusenfläche des Prismas B1 mit einem Material mit dem Reflektionsvermögen R1 teilverspiegelt wird und somit im Störfall der Anteil R1 des ankommenden Lichtes in die Empfangsdiode ED und der Anteil 1-R1 auf den Ausgang 4 übertragen wird. Im Durchschaltefall findet auf der Rückseite des Beschichtungsmaterials mit Reflektionsvermögen R1 ebenfalls Totalreflektion statt. Bei absorptionsloser Verspiegelung (Dielektrika) wird im Durchschaltefall alles reflektiert. Die Übertragung zwischen dem Laser und dem Ausgang mit dem Lichtwellenleiter LWL4 bleibt unbeeinträchtigt.

2. Es besteht ein Unterschied im Brechungsindex von Prisma B1 und Prisma B2. Im Störfall wird an der Grenzfläche zwischen den beiden Prismen aufgrund der Fresnelschen Formel ein Anteil R1 auf den Ausgang 2 und ein Anteil 1-R1 auf den Ausgang 4 übertragen. Im Durchschaltefall erfolgt an der Hypotenusenfläche von Prisma 1 wieder Totalreflektion mit R1 = 1, so daß trotz der Ankopplung der Empfangsdiode im Störfall im Durchschaltefall keine Verluste auftreten. Auf der Strecke Eingang 3 zu Ausgang 4 erfolgt ebenfalls Totalreflektion und es treten keine Verluste auf.

3. Auf die Hypotenusenfläche des Prismas B1 wird eine dünne Schicht mit einem Brechzahlunterschied zum Prisma B1 aufgebracht. Die Reflektionsverhältnisse entsprechen denen des Beispiels 2.

4. An der der Drehachse gegenüberliegenden Seite der Hypotenusenfläche des Prismas B1 wird ein dünner Abstandsstreifen aufgebracht, so daß die Prismen B1 und B2 sich auch im Störfall nicht ganz berühren, sondern noch ein dünner Spalt von der Größenordnung kleiner als eine Lichtschwellenlänge frei bleibt. Dadurch wird die Totalreflektion teilweise nicht unterdrückt. Das Reflektionsvermögen im Störfall läßt sich durch die Breite des Spaltes einstellen. Im Durchschaltefall sind beide durchgeschaltete Wege nicht beeinträchtigt.

**Patentansprüche**

1. Optischer Umschalter mit zwei Prismen (B1, B2) die derart relativ zueinander bewegbar sind, daß deren Hypotenusenflächen an- oder auseinander liegen und Licht im ersten Fall durch die Prismen (B1, B2) ohne Ablenkung hindurchtritt und somit ein oder mehrere erste Wege geschaltet sind und im zweiten Fall Licht zumindest teilweise an den Hypotenusenflächen reflektiert wird und somit ein oder mehrere zweite Wege geschaltet sind, dadurch gekennzeichnet, daß zwei Strukturen (M1, M2) vorgesehen sind, die um einen gemeinsamen Drehpunkt (D) gelagert sind und auf denen jeweils eines der Prismen (B1, B2) und die optischen oder optoelektronischen Komponenten der zweiten Wege (LWL1, L1, L2, ED; L, L3, L4, LWL4), die bei Reflektion an dem jeweiligen Prisma (B1, B2) geschaltet sind, fixiert sind.

2. Optischer Umschalter nach Anspruch 1, dadurch gekennzeichnet, daß die Hypotenusenflächen der Prismen (B1, B2) bereits in Kontakt sind, wenn die beiden Strukturen (M1, M2) sich noch nicht berühren.

3. Optischer Umschalter nach einem der Ansprüche 1 oder 2, dadurch gekennzeichnet, daß die Hypotenusenfläche des Prismas B1 teilverspiegelt ist.

4. Optischer Umschalter nach einem der Ansprüche 1 oder 2, dadurch gekennzeichnet, daß die beiden Prismen (B1, B2) aus Materialien mit unterschiedlichem Brechungsindex hergestellt sind.

**5.** Optischer Umschalter nach einem der Ansprüche 1 oder 2, dadurch gekennzeichnet, daß die Hypotenusenfläche des Prismas (B1) eine dünne Schicht aufweist, deren Brechzahl sich von der des Prismas (B1) unterscheidet.

**6.** Optischer Umschalter nach einem der Ansprüche 1 oder 2, dadurch gekennzeichnet, daß der minimale Abstand der Hypotenusenflächen der beiden Prismen (B1, B2) $a_{min}$

$0 < a_{min} < \lambda$

$\lambda$ Lichtwellenlänge
ist.

Fig. 1